(19) Europäisches Patentamt

European Patent Office

Office européen des brevets

(11) **EP 1 359 385 A1**

(12) **EUROPÄISCHE PATENTANMELDUNG**

(43) Veröffentlichungstag:
**05.11.2003 Patentblatt 2003/45**

(51) Int Cl.7: **F28F 19/04**

(21) Anmeldenummer: **03005590.9**

(22) Anmeldetag: **12.03.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **26.03.2002 DE 10213756**

(71) Anmelder: **Behr GmbH & Co.**
**70469 Stuttgart (DE)**

(72) Erfinder:
- **Angermann, Hans-H., Dr.**
  **70197 Stuttgart (DE)**
- **Damsohn, Herbert, Dr.-Ing.**
  **73773 Aichwald (DE)**

(54) **Kreislauf oder Komponente hiervon für ein Kühlmittel**

(57) Die Erfindung betrifft Kreislauf oder Komponente hiervon für ein Kühlmittel, insbesondere aus Aluminium, wobei der Kreislauf oder die Komponente im mit dem Kühlmittel in Kontakt stehenden Bereich mit einer Beschichtung aus einem anorganisch-organischen Hybridmaterial versehen ist.

**EP 1 359 385 A1**

Printed by Jouve, 75001 PARIS (FR)

**Beschreibung**

Die Erfindung betrifft einen Kreislauf oder eine Komponente hiervon für ein Kühlmittel, insbesondere aus Aluminium.

Es ist bekannt, zur Erhöhung der Korrosionsbeständigkeit von Wärmeübertragern für die Kühlung im Bereich von Brennstoffzellen Beschichtungen an den Kontaktflächen von Leitungen, insbesondere Flachrohr- oder Sickenrohrleitungen, und an den Sammelbehältern für das Kühlwasser, vorzusehen. Hierbei müssen die Beschichtungen ferner verhindern, dass ein gewisser Schwellwert der elektrischen Leitfähigkeit des Kühlwassers nicht überschritten wird, um die Funktion der Brennstoffzelle nicht zu beeinträchtigen. Insbesondere in Verbindung mit Direkt-Methanol-Brennstoffzellen kommt es aufgrund der Bildung von Ameisensäure zu einem niedrigen pH-Wert des Kühlmittels und dabei im Betrieb zu einer erheblichen Beanspruchung der Wärmeübertrager.

Um den Kreislauf zu schützen, wird beispielsweise vorgeschlagen, mit Hilfe von Ionentauschern die ausge-lösten Ionen zu binden. Diese Ionentauscher müssen jedoch regelmäßig gewechselt werden.

Ferner werden Beschichtungen wie Grünchromatierung oder aber die Verwendung besonderer Aluminium-Legierungen vorgeschlagen.

Andererseits sind aus dem Bereich der Lacke anorganisch-organische Hybridpolymere (ORMOCER®e oder Nanomere®) bekannt, die bspw. auch als Korrosionsschutzschichten verwendet werden können. Diese Werkstoffe werden nach dem Sol-Gel-Verfahren synthetisiert, wobei durch gesteuerte Hydrolyse und Kondensation von organisch modifizierten Si-Alkoxiden zunächst ein anorganisches Netzwerk aufgebaut wird. Eine Cokondensation mit anderen Metallalkoxiden (Ti-, Zr-, Al-Alkoxide) ist ebenfalls möglich. In einem nachfolgenden Schritt werden die am anorganischen Netzwerk fixierten polymerisierbaren Gruppen u.a. thermisch bzw. UV-initiiert miteinander vernetzt. Außerdem können organisch modifizierte Si-Alkoxide eingesetzt werden, die keine organischen Polymerisationsreaktionen eingehen und damit zu einer organischen Funktionalisierung des anorganischen Netzwerkes beitragen. Durch dieses 2-stufige Verfahren wird ein anorganisch-organisches Copolymer aufgebaut. Eine Hydrolyse und Kondensation von Silizium-Alkoxiden zur Erzeugung anorganischer Oxidnetzwerke ist im folgenden dargestellt.

Hydrolyse:

$$Si\,(OR)_4 + n\,H_2O \rightarrow Si\,(OR)_{4-n}(OH)_n + n\,R\,OH$$

Kondensation:

$$(OR)_3\,Si\text{-}OR + HO\text{-}Si(OR)_3 \rightarrow (OR)_3\,Si\text{-}O\text{-}Si\,(OR)_3 + HOR$$

$$(OR)_3\,Si\text{-}OH + HO\text{-}Si(OR)_3 \rightarrow (OR)_3\,Si\text{-}O\text{-}Si\,(OR)_3 + H_2O$$

Es ist Aufgabe der Erfindung, einen Kreislauf oder eine Komponente hiervon für ein Kühlmittel, insbesondere einen Kreislauf aus Aluminium, zu verbessern.

Diese Aufgabe wird gelöst durch einen Kreislauf oder eine Komponente hiervon mit den Merkmalen des Anspruchs 1.

Erfindungsgemäß wird ein Kreislauf oder eine Komponente hiervon für ein Kühlmittel, insbesondere aus Aluminium, vorgesehen, bei welchem der mit dem Kühlmittel in Kontakt stehende Bereich mit einer Beschichtung aus einem anorganisch-organischen Hybridmaterial versehen ist, insbesondere mit einer Beschichtung aus Nanokompositen, insbesondere ORMOCER®en und/oder Nanomeren®. Dies betrifft insbesondere einen Kühlmittelkreislauf eines Wärmeübertragers, bspw. zur Kühlung von Brennstoffzellen, oder einzelnen Komponenten hiervon, die mit dem Kühlmittel in Kontakt kommen, wie bspw. die Innenflächen von Leitungen oder Sammelbehältern.

Derartige Beschichtungen bieten zum einen einen guten Korrosionsschutz und haften gut auf Metalloberflächen, zum anderen können sie mittels herkömmlicher Nasslackverfahren aufgetragen werden und härten bei relativ niedrigen Temperaturen aus. Sie sind ferner in aller Regel toxikologisch unbedenklich.

Vorzugsweise weist die Beschichtung eine Dicke von 10 Mikrometer oder weniger, insbesondere zwischen 1 und 5 Mikrometer auf, weshalb nur eine geringe Behinderung des Wärmeübergangs erfolgt.

Vorzugsweise weist die Beschichtung Füllstoffe, insbesondere Partikel, Fasern oder Gewebe, auf. Hierbei ist insbesondere ein Silikatfüllstoff in Verbindung mit Nanokompositen geeignet. Dabei kann der Silikatfüllstoff in der Beschichtung in Form von überlappenden Plättchen vorliegen.

Vorzugsweise erfolgt ein Beizen der zu beschichtenden Fläche vor dem Aufbringen der Beschichtung, so dass störende Elemente wie z.B. Flussmittelreste entfernt werden.

Vorzugsweise werden derartig beschichtete Leitungen für Wärmetauscher in Verbindung mit Brennstoffzellen, direkt in Kühlmittelkanälen in Brennstoffzellen, insbesondere in Polymerelektrolyt- oder Direktmethanol-Brennstoffzellen, oder als Verbindungselemente zwischen den Komponenten eines Brennstoffzellenkreislaufs, verwendet.

Im folgenden wird die Erfindung anhand zweier Ausführungsbeispiele im einzelnen erläutert.

Gemäß dem ersten Ausführungsbeispiel wird ein Wärmeübertrager für die Kühlung im Bereich von Brennstoffzellen, insbesondere Direkt-Methanol-Brennstoffzellen, vorgesehen, welcher zur Leitung des Kühlwassers Flachrohre aus Aluminium mit einer durchgehenden Mittelsicke (Sickenrohre) aufweist, zwischen denen Rippenpakete angeordnet sind, um die von den Brennstoffzellen an das Kühlwasser abgegebene Wärme möglichst effektiv an die Luft wieder abgeben zu können. Die Flachrohrpakete sind beidseitig von Sammelbehältern umgeben, die vorzugsweise aus Aluminium bestehen.

Um die Sickenrohre und die Sammelbehälter vor Korrosion durch das Kühlwasser zu schützen und die elektrische Leitfähigkeit gering zu halten, sind die Sickenrohre und die Sammelbehälter innen, d.h. in den Bereichen, die mit dem Kühlwasser in direktem Kontakt stehen, mit einer Beschichtung versehen.

Die Beschichtung wird durch ein anorganisch-organisches Hybridmaterial gebildet, im vorliegenden Fall durch ein Nanokomposite mit einem Füllstoff, im vorliegenden Fall einem Silikatfüllstoff. Die Dicke der Beschichtung beträgt je nach Feststoffgehalt zwischen 1 und 5 Mikrometer. Der Silikatfüllstoff hat in diesem Fall die Form von Plättchen, die sich in der Beschichtung überlappen.

Gemäß dem zweiten Ausführungsbeispiel sind Kühlmittelleitungen im Inneren einer Brennstoffzelle und Verbindungsleitungen zwischen den Komponenten des Kreislaufs mit einer entsprechenden Beschichtung versehen. Die Beschichtung wird durch ein anorganisch-organisches Hybridmaterial gebildet, im vorliegenden Fall durch ein Nanomer®. Die Dicke der Beschichtung beträgt je nach Feststoffgehalt zwischen 1 und 5 Mikrometer.

Das Aufbringen der o.g. Beschichtungen erfolgt mittels eines konventionellen Nasslackverfahrens, bspw. durch Tauchen, Sprühen, Spin-Coating etc. und anschließendem Aushärten bei Temperaturen unter 200°C, insbesondere bei Temperaturen um 130°C (thermische Aushärtung). Alternativ kann eine Härtung der Beschichtung durch UV-Bestrahlung oder eine Redoxinitiierte Härtung erfolgen.

Insbesondere bei NOCOLOK-gelöteten Wärmeübertragern erfolgt vor dem Aufbringen der Beschichtung eine Entfernung von Flussmittelschichten, bspw. mittels Beizen, um eine optimale Beschichtung zu gewährleisten. Ferner sollten zu beschichtende Oberflächen vor dem Aufbringen der Beschichtung entfettet werden.

**Patentansprüche**

1. Kreislauf oder Komponente hiervon für ein Kühlmittel, insbesondere aus Aluminium, **dadurch gekennzeichnet, dass** der Kreislauf oder die Komponente im mit dem Kühlmittel in Kontakt stehenden Bereich mit einer Beschichtung aus einem anorganisch-organischen Hybridmaterial versehen ist.

2. Kreislauf oder Komponente nach Anspruch 1, **dadurch gekennzeichnet, dass** Nanokomposite, insbesondere ORMOCER®e und/oder Nanomere®, die Beschichtung bilden.

3. Kreislauf oder Komponente nach einem der vorhergehenden Ansprüche, **dadurch gekennzeichnet, dass** die Beschichtung eine Dicke von 10 Mikrometer oder weniger, insbesondere zwischen 1 und 5 Mikrometer, aufweist.

4. Kreislauf oder Komponente nach einem der vorhergehenden Ansprüche, **dadurch gekennzeichnet, dass** die Beschichtung Füllstoffe aufweist.

5. Kreislauf oder Komponente nach Anspruch 4, **gekennzeichnet durch** einen Silikatfüllstoff.

6. Kreislauf oder Komponente nach Anspruch 4 oder 5, **gekennzeichnet durch** einen Füllstoff in Form von Plättchen.

7. Kreislauf oder Komponente nach Anspruch 6, **dadurch gekennzeichnet, dass** sich die Plättchen überlappen.

8. Kreislauf oder Komponente nach einem der vorhergehenden Ansprüche, **dadurch gekennzeichnet, dass** das Kühlmittel entionisiertes Wasser ist.

9.  Kreislauf oder Komponente nach einem der vorhergehenden Ansprüche, **dadurch gekennzeichnet, dass** das Kühlmittel mit Frostschutzmitteln und/oder Korrosionsinhibitoren versetzt ist.

10. Verfahren zum Aufbringen einer Beschichtung gemäß einem der Ansprüche 1 bis 9, **dadurch gekennzeichnet, dass** vor dem Aufbringen der Beschichtung die zu beschichtende Oberfläche gebeizt wird.

11. Verwendung eines Wärmetauschers in einem Kreislauf gemäß einem der Ansprüche 1 bis 9, insbesondere für ein Kraftfahrzeug.

12. Verwendung einer Brennstoffzelle, insbesondere einer Polymerelektrolyt- oder Direktmethanol-Brennstoffzelle, in einem Kreislauf gemäß einem der Ansprüche 1 bis 9.

13. Verwendung von Verbindungselementen zwischen den Komponenten eines Brennstoffzellenkreislaufs gemäß einem der Ansprüche 1 bis 9.

**Europäisches Patentamt**

**EUROPÄISCHER RECHERCHENBERICHT**

Nummer der Anmeldung

EP 03 00 5590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02 08344 A (REDFORD KEITH ;SIMON CHRISTIAN (NO); SINTEF (NO)) 31. Januar 2002 (2002-01-31) | 1-4 | F28F19/04 |
| A | * das ganze Dokument * --- | 5-13 | |
| X | DE 198 20 133 A (STIEBEL ELTRON GMBH & CO KG) 11. November 1999 (1999-11-11) | 1-4 | |
| A | * das ganze Dokument * --- | 5-13 | |
| A | US 5 316 855 A (WANG BING ET AL) 31. Mai 1994 (1994-05-31) * das ganze Dokument * ----- | 1-13 | |

RECHERCHIERTE SACHGEBIETE (Int.Cl.7)

F28F
F16L

Der vorliegende Recherchenbericht wurde für alle Patentansprüche erstellt

| Recherchenort | Abschlußdatum der Recherche | Prüfer |
|---|---|---|
| MÜNCHEN | 9. Juli 2003 | Bain, D |

**ANHANG ZUM EUROPÄISCHEN RECHERCHENBERICHT
ÜBER DIE EUROPÄISCHE PATENTANMELDUNG NR.**

EP 03 00 5590

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 0208344 | A | 31-01-2002 | NO | 20003463 A | 07-01-2002 |
| | | | AU | 9244601 A | 05-02-2002 |
| | | | CA | 2414993 A1 | 31-01-2002 |
| | | | EP | 1297081 A2 | 02-04-2003 |
| | | | WO | 0208344 A2 | 31-01-2002 |
| DE 19820133 | A | 11-11-1999 | DE | 19820133 A1 | 11-11-1999 |
| US 5316855 | A | 31-05-1994 | US | 5371261 A | 06-12-1994 |
| | | | WO | 9208723 A1 | 29-05-1992 |

EPO FORM P0461

Für nähere Einzelheiten zu diesem Anhang : siehe Amtsblatt des Europäischen Patentamts, Nr.12/82